Europäisches Patentamt

European Patent Office

Office européen des brevets

(11) Veröffentlichungsnummer: **0 367 066**

**A2**

(12) **EUROPÄISCHE PATENTANMELDUNG**

(21) Anmeldenummer: **89119681.8**

(51) Int. Cl.5: **G01K 13/00**

(22) Anmeldetag: **24.10.89**

(30) Priorität: **02.11.88 DE 3837159**

(43) Veröffentlichungstag der Anmeldung:
**09.05.90 Patentblatt 90/19**

(84) Benannte Vertragsstaaten:
**AT CH DE FR GB IT LI**

(71) Anmelder: **KABELMETAL ELECTRO GMBH**
**Kabelkamp 20 Postfach 260**
**D-3000 Hannover 1(DE)**

(72) Erfinder: **Schauer, Friedrich, Dipl.-Ing.**
**Forstweg 10**
**D-8501 Heroldsberg(DE)**
Erfinder: **Böll, Jürgen, Dipl.-Ing.**
**Simmelberger Weg 296**
**D-8501 Heroldsberg(DE)**

(54) **Elektrische Leitung zur Temperaturerfassung.**

(57) Es wird eine elektrische Leitung zur Temperaturerfassung angegeben, an deren Leiter (8,10,11) in
axialen Abständen an von der Isolierung befreiten
Anschlußstellen (9) Bauteile (4) angeschlossen sind,
die einen Temperaturfühler (5) und eine mit demselben verbundene elektronische Sendeschaltung (6)
aufweisen. Um eine gut biegbare Leitung zu erhalten, an deren Leiter (8,10,11) die Bauteile (4) trotzdem leicht anschließbar sind, ist ein Teil der Leiter
(8) mit einer dem axialen Abstand der Anschlußstellen (9) voneinander entsprechenden Schlaglänge
miteinander verseilt. Zwei weitere Leiter (10,11) sind
über die ganze Länge der Leitung außen an zwei
einander gegenüber liegenden Seiten des Verbundes aus verseilten Leitern (8) an demselben festgelegt. Alle Bauteile (4) sind an die beiden außen
liegenden Leiter (10,11) und mindestens einen der
verseilten, an den Anschlußstellen (9) etwa in einer
Ebene zwischen diesen beiden Leitern (10,11) liegenden Leiter (12,13) angeschlossen.

Fig. 2

Die Erfindung betrifft eine elektrische Leitung mit mindestens vier isolierten Leitern zur Temperaturerfassung, an deren Leiter in axialen Abständen an von der Isolierung befreiten Anschlußstellen Bauteile angeschlossen sind, die einen Temperaturfühler und eine mit demselben verbundene elektronische Schaltung aufweisen, welche als Sender von durch den Temperaturfühler initierten Signalen dient.

Derartige Leitungen werden beispielsweise zur Temperaturüberwachung in Schächten oder Tunneln verwendet. Dabei sollen nicht nur hohe Temperaturen, sondern insbesondere auch tiefe Temperaturen erfaßt werden, wenn beispielsweise die Wände von Tunnelstrecken während der Herstellung aus Festigkeitsgründen vereist werden. Auf dem Markt ist eine für diesen Zweck verwendbare, als Flachleitung ausgebildete elektrische Leitung erhältlich. In dieser Flachleitung sind vier isolierte Leiter in einer Ebene nebeneinander angeordnet. An den Anschlußstellen von Bauteilen mit Temperaturfühler und Sendeschaltung ist die Isolierung der Leiter entfernt. Die Bauteile sind über getrennte Anschlüsse an die Leiter angelötet. Die Flachleitung ist von einem elastischen Formkörper mit kreisrunder, ovaler oder länglich abgerundeter Umfangsfläche umgeben, über dem ein elektromagnetisch wirksamer Schirm und ein Schutzmantel liegen. Diese bekannte Leitung ist nur in der Ebene der Flachbandleitung biegbar. Ihre Verlegung ist daher nur in einer bestimmten Lage möglich. Das macht sich insbesondere bei schwierigen räumlichen Verhältnissen mit geringem Platz nachteilig bemerkbar.

Der Erfindung liegt die Aufgabe zugrunde, eine elektrische Leitung zur Temperaturerfassung anzugeben, die bei Weiterverwendung der bekannten Bauteile mit Temperaturfühler und Sendeschaltung in allen Richtungen gut biegbar ist.

Diese Aufgabe wird bei einer Leitung der eingangs geschilderten Art gemäß der Erfindung dadurch gelöst,
- daß ein Teil der Leiter mit einer auf den axialen Abstand der Anschlußstellen voneinander abgestimmten Schlaglänge miteinander verseilt ist,
- daß mindestens zwei weitere Leiter über die ganze Länge der Leitung verlaufend außen, an zwei einander gegenüber liegenden Seiten des Verbundes aus verseilten Leitern zumindest in Abständen an demselben festgelegt sind und
- daß alle Bauteile an die beiden außen liegenden Leiter und mindestens einen der verseilten, an den Anschlußstellen etwa in einer Ebene zwischen diesen beiden Leitern liegenden Leiter angeschlossen sind.

Durch die Verseilung eines Teils der Leiter ergibt sich insgesamt eine Leitung, die in allen Richtungen ohne Einschränkung gut biegbar ist.

Durch die entsprechend dem Abstand der Anschlußstellen für die Bauteile gewählte Schlaglänge der verseilten Leiter und den Trick, dem verseilten Verbund auf beiden Seiten je einen weiteren, nicht mit verseilten Leiter hinzuzufügen, ist auf einfache Weise sichergestellt, daß an den Anschlußstellen für die Bauteile mindestens drei, in bevorzugter Ausführungsform vier, Leiter etwa in einer Ebene nebeneinander liegen. Das Anschließen der Bauteile an die entsprechend abisolierten Leiter über getrennte Anschlüsse ist dadurch ebenso einfach wie bei einer Flachleitung.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

Fig. 1 eine Leitung nach der Erfindung in schematischer Darstellung.

Fig. 2 einen Abschnitt der Leitung ohne Schutzmantel in vergrößerter Darstellung.

Fig. 3 einen Querschnitt der Leitung in nochmals vergrößerter Darstellung.

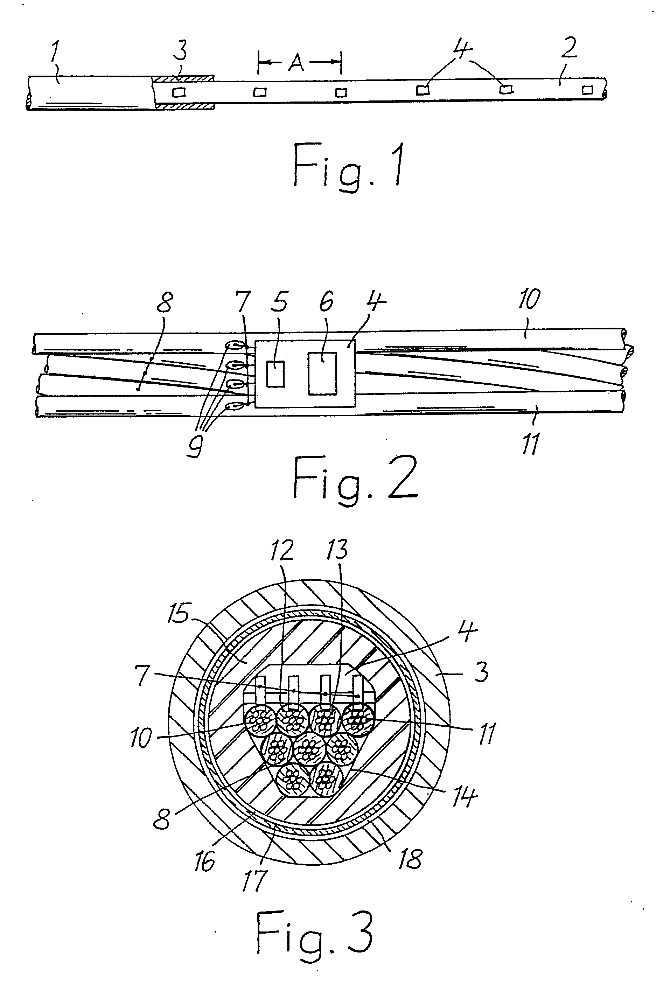

In Fig. 1 ist eine elektrische Leitung 1 schematisch dargestellt, die aus einer Seele 2 und einem dieselbe umgebenden Schutzmantel 3 besteht. Im Verlauf der Leitung 1 sind Bauteile 4 an Leiter derselben angeschlossen, die einen Temperaturfühler 5 und eine elektronische Sendeschaltung 6 umfassen. Der Abstand A der Bauteile 4 voneinander liegt fest. Sie können alle mit gleichbleibendem Abstand in der Leitung 1 angeordnet werden. Es ist jedoch auch möglich, den Abstand A zu variieren.

Die Bauteile 4 sind vorzugsweise als Plättchen in Form einer gedruckten Schaltung ausgeführt. Als Temperaturfühler 5 werden beispielsweise NTC-Widerstände eingesetzt. Durch die Sendeschaltung 6 werden vom Temperaturfühler 5 initierte Signale zu einer an die Leitung 1 angeschlossenen Zentrale übertragen. Diese Signale werden durch Änderung der Temperatur in der Umgebung der Leitung 1 verursacht. Es ist auch möglich, jedes Bauteil 4 mit einer einer vorgegebenen Temperatur entsprechenden Information zu "programmieren", bei deren Über- oder Unterschreitung ein Signal gegeben wird. Die Bauteile 4 sind mit einer speziellen Kennzeichnung versehen, so daß sie bzw. ihr Ort von der Zentrale aus identifiziert werden können. Die Signale der einzelnen Bauteile 4 können beispielsweise mit unterschiedlichen Frequenzen übertragen werden.

Die Bauteile 4 sind vorzugsweise über vier getrennte Drähte 7 mit vier isolierten Leitern der Leitung 1 verbunden. Da es sich bei den Bauteilen 4 um flache Plättchen handelt, ist es zweckmäßig, die Verbindung mit den Leitern 8 der Leitung 1 in einer Ebene herzustellen. Dazu sind im dargestellten Ausführungsbeispiel vier der Leiter 8 an Anschlußstellen 9 von ihrer Isolierung befreit. An den Anschlußstellen 9 können die Drähte 7 beispielsweise angelötet werden.

Die Leitung 1 ist als flexible Leitung ausgeführt. Ein Teil ihrer Leiter ist zur Sicherstellung der Biegbarkeit der Leitung 1 in allen Richtungen miteinander verseilt. Im dargestellten Ausführungsbeispiel sind sieben Leiter 8 miteinander so verseilt, daß sechs Leiter um einen zentralen Leiter herum angeordnet sind. Auf beiden Seiten des Verbundes aus verseilten Leitern 8 ist je ein Leiter 10 bzw. 11 angeordnet, der nicht mit verseilt ist, sich aber über die gesamte Länge der Leitung 1 erstreckt.

Die Leiter 10 und 11 schließen also den Verbund aus verseilten Leitern 8 zwischen sich ein. Es liegt dann immer mindestens einer der Leiter 8 in einer Ebene zwischen den beiden Leitern 10 und 11. In dem in Fig. 3 dargestellten Ausführungsbeispiel liegen die beiden Leiter 12 und 13 in einer Höhe nebeneinander und zumindest annähernd in einer Ebene mit den beiden Leitern 10 und 11. Die hier nebeneinander liegenden Leiter 10 bis 13 sind so angeordnet, daß sie vorzugsweise jeweils einen gleichbleibenden Abstand zueinander haben.

Die beiden Leiter 12 und 13 sind in bevorzugter Ausführungsform besonders gekennzeichnet, beispielsweise durch eine andersfarbige Isolierung. Sie können dadurch zum Anschließen der Bauteile 4 leicht und sicher identifiziert werden. Die Schlaglänge der Verseilung im Verbund der Leiter 8 ist nun so gewählt, daß die beiden Leiter 12 und 13 an den Anschlußstellen 9 für die Bauteile 4 immer an der gleichen Stelle liegen, beispielsweise oben. Die Schlaglänge kann also jeweils dem Abstand A entsprechen. Sie kann aber auch gleich einem ganzzahligen Vielfachen oder gleich einem kleinsten Gemeinsamen desselben sein. Die beiden Leiter 10 und 11 sind - wie schon erwähnt - am Verbund aus verseilten Leitern 8 so angeordnet, daß sie etwa in einer Ebene mit den Leitern 12 und 13 liegen. Die Bauteile 4 können daher sehr einfach mit den Leitern 10 bis 13 verbunden werden.

Zur Festlegung der Leiter 10 und 11 am Verbund aus verseilten Leitern 8 kann zumindest in dem Bereich, in dem die Bauteile 4 angebracht sind, eine Bandierung 14 aufgewickelt werden. Eine solche Bandierung 14 kann allerdings auch auf der gesamten Länge der Leitung 1 vorhanden sein.

Wenn der Abstand A zwischen den einzelnen Bauteilen 4 bzw. deren Anschlußstellen 9 nicht gleichbleibend ist, muß in gleicher Weise die Schlaglänge verändert werden, mit der die Leiter 8 miteinander verseilt werden. Das ist durch entsprechende Steuerung der Verseilvorrichtung ohne weiteres möglich.

Von den Leitern 8 werden im geschilderten Ausführungsbeispiel nur zwei zum Anschließen der Bauteile 4 benötigt. Die übrigen Leiter können für andere Zwecke, wie beispielsweise die Stromversorgung von Geräten, verwendet werden. Es ist jedoch auch möglich, die Leitung 1 in Abschnitte zu unterteilen und für eine größere Strecke zwei oder mehr Abschnitte miteinander zu verbinden. Die Signale der Bauteile 4 der einzelnen Abschnitte können dann jeweils über die Leiter 8 der anderen Abschnitte zu der Zentrale übertragen werden, die nicht mit Bauteilen 4 bestückt sind. Auf diese Weise können die Signale der einzelnen Abschnitte störungsfrei und selektiv zur Zentrale übertragen werden.

Über der aus dem Verbund von verseilten Leitern 8 und Leitern 10 und 11 sowie Bauteilen 4 bestehenden Seele 2 der Leitung 1 kann eine Ausgleichsschicht 15 angebracht werden, die aus einer elastischen Kunststoffmischung bestehen kann. Über der Schicht 15 kann der Schutzmantel 3 direkt angebracht werden, der beispielsweise aus vernetztem Polyurethan besteht. Es ist jedoch auch möglich, um die Ausgleichsschicht 15 zunächst noch einen Innenmantel 16 aus einem festeren Material, wie beispielsweise Polyamid herumzuformen. Über dem Innenmantel 16 kann außerdem noch ein Eisenschirm 17 liegen, der von einem Kupferschirm 18 umgeben ist.

Die Schirme 17 und 18 stellen eine elektromagnetisch wirksame Abschirmung der Seele 2 dar. Der Eisenschirm 17 kann aus überlappt aufgewikkelten Bändern bestehen. Der Kupferschirm 18 ist vorzugsweise ein geschlossenes Rohr, das zur Verbesserung seiner Biegbarkeit quer zu seiner Längsrichtung gewellt ist.

In dem Verbund aus verseilten Leitern 8 können auch weniger oder mehr als sieben Leiter angeordnet werden. Zwischen den Leitern 10 und 11 muß mindestens ein Leiter 8 liegen. In diesem Fall wären Bauteile 4 mit nur drei getrennten Drähten 7 anzuschließen.

## Ansprüche

1. Elektrische Leitung mit mindestens vier isolierten Leitern zur Temperaturerfassung, an deren Leiter in axialen Abständen an von der Isolierung befreiten Anschlußstellen Bauteile angeschlossen sind, die einen Temperaturfühler und eine mit demselben verbundene elektronische Schaltung aufweisen, welche als Sender von durch den Temperaturfühler initiierten Signalen dient, dadurch gekennzeichnet,
- daß ein Teil der Leiter (8) mit einer auf den axialen Abstand (A) der Anschlußstellen (9) voneinander abgestimmten Schlaglänge miteinander verseilt ist,
- daß mindestens zwei weitere Leiter (10,11) über die ganze Länge der Leitung (1) außen, an zwei einander gegenüber liegenden Seiten des Verbundes aus verseilten Leitern (8) zumindest in Abständen an demselben festgelegt sind und

- daß alle Bauteile (4) an die beiden außen liegenden Leiter (10,11) und mindestens einen der verseilten, an den Anschlußstellen (9) etwa in einer Ebene zwischen diesen beiden Leitern (10,11) liegenden Leiter (12,13) angeschlossen sind.

2. Leitung nach Anspruch 1, dadurch gekennzeichnet, daß die Schlaglänge der verseilten Leiter (8) gleich dem Abstand (A) der Bauteile (4) voneinander ist.

3. Leitung nach Anspruch 1, dadurch gekennzeichnet, daß die Schlaglänge der verseilten Leiter (8) gleich einem ganzzahligen Vielfachen oder einem kleinsten Gemeinsamen des Abstandes (A) der Bauteile (4) voneinander ist.

4. Leitung nach einem der Ansprüche 1 bis 3, dadurch gekennzeichnet, daß die in einer Ebene liegenden Leiter (10,11,12,13) jeweils gleichen Abstand zueinander haben.

5. Leitung nach einem der Ansprüche 1 bis 4, dadurch gekennzeichnet,
- daß in dem verseilten Verbund sieben Leiter (8) miteinander verseilt sind und
- daß die beiden außen liegenden Leiter (10,11) so geführt sind, daß sie an den Anschlußstellen etwa in einer Ebene mit zwei zwischen ihnen liegenden Leitern (12,13) des verseilten Verbundes angeordnet sind.

6. Leitung nach einem der Ansprüche I bis 5, dadurch gekennzeichnet, daß die beiden Leiter (12,13) des verseilten Verbundes, die an den Anschlußstellen zwischen den beiden außen angeordneten Leitern (10,11) liegen, über ihre ganze Länge gekennzeichnet sind.

7. Leitung nach einem der Ansprüche 1 bis 6, dadurch gekennzeichnet, daß zumindest an den Anschlußstellen eine alle Leiter und die Bauteile (4) umgebende Bandierung (14) aufgewickelt ist.

8. Leitung nach einem der Ansprüche 1 bis 7, dadurch gekennzeichnet, daß die aus allen Leitern und den Bauteilen (4) bestehende Einheit von einem aus Isoliermaterial bestehenden Schutzmantel (3) umgeben ist.

9. Leitung nach einem der Ansprüche 1 bis 8, dadurch gekennzeichnet, daß über der aus allen Leitern und den Bauteilen (4) bestehenden Einheit ein elektromagnetisch wirksamer Schirm (17,18) angeordnet ist, über dem der Schutzmantel (3) aufgebracht ist.

Fig. 1

Fig. 2

Fig. 3

88-68/S